# NEUE EUROPÄISCHE PATENTSCHRIFT

(11) **EP 3 413 766 B2**
(45) Veröffentlichungstag und Bekanntmachung des Hinweises auf die Entscheidung über den Einspruch: **26.07.2023**
(45) Hinweis auf die Patenterteilung: 11.03.2020
(21) Anmeldenummer: 17705088.7
(22) Anmeldetag: 10.02.2017
(51) Int. Cl.: A47J 31/44, A47J 31/40, A47J 31/54

(54) **GETRÄNKEZUBEREITUNGSMASCHINE**
MACHINE FOR MAKING BEVERAGES
MACHINE DE PRÉPARATION DE BOISSONS

(30) Priorität: 12.02.2016 EP 16155564
(43) Veröffentlichungstag der Anmeldung: 19.12.2018
(73) Patentinhaber: Tchibo (Schweiz) AG, 8304 Wallisellen (CH)
(72) Erfinder: HARTMANN, Doreen, 8050 Zürich (CH); GÖDDE, Wolfgang, 58809 Neuenrade (DE)
(74) Vertreter: Frei Patent Attorneys
(86) Internationale Anmeldenummer: PCT/EP2017/053020
(87) Internationale Veröffentlichungsnummer: WO 2017/137569

(56) Entgegenhaltungen:
- EP-A1- 2 110 034
- EP-A1- 2 196 117
- WO-A1-2007/003062
- WO-A1-2008/138710
- WO-A1-2014/205263
- WO-A1-2015/149368
- WO-A1-2015/172224
- DE-A1-102007 011 120
- DE-U1- 20 312 091
- FR-A1- 2 856 573
- GB-A- 2 507 104
- US-A1- 2012 186 594
- US-A1- 2013 233 086
- US-A1- 2014 116 426
- US-A1- 2015 014 409
- US-A1- 2015 068 523
- US-A1- 2015 208 729

## Beschreibung

Die Erfindung betrifft Getränkezubereitungsmaschinen zum Zubereiten von Getränken oder dergleichen aus einer Portionspackung mit einer Portionsverpackung (bspw. Kapsel) und einem in der Portionsverpackung enthaltenen Extraktionsgut (bspw. Kaffee). Sie betrifft insbesondere eine Getränkezubereitungsmaschine mit einer Möglichkeit, eine verbleibende Getränkemenge während des Zubereitungsprozesses einzustellen.

Aus dem Stand der Technik sind zahlreiche Getränkezubereitungsmaschinen bekannt, bei denen eine Getränkemenge durch Wahl eines dafür vorgesehenen Bedienknopfs einstellbar ist. So weisen bspw. viele Kaffeemaschinen einen Knopf für einen langen Kaffee und einen Knopf für einen kurzen Kaffee (Espresso) auf. Die Menge, die jeweils produziert wird, ist im Allgemeinen programmierbar. Wenn keine der auswählbaren Mengen passt oder wenn der Benutzer nach Auswahl des gewünschten Getränks bemerkt, dass er eine kleinere Menge als angegeben wünscht - bspw. wenn er ein zu kleines Trinkgefäss unter den Getränkeauslauf gestellt hat - bieten solche Maschinen oft die Möglichkeit, den Zubereitungsprozess durch ein erneutes Drücken des entsprechenden Knopfs abzubrechen. Bei höheren Ansprüchen an die Auswählbarkeit der Getränkemenge ist das aber unbefriedigend, da erstens vom Benutzer ein sehr genaues Timing verlangt ist und es zweitens nur möglich ist, die Menge zu reduzieren, nicht zu erhöhen.

Die DE 203 13 091 U1 lehrt eine Kaffeemaschine mit einer Mengenwahleinrichtung zum Vorwählen einer Getränkemenge. Die Mengenwahleinrichtung weist einen Drehknopf auf.

Die WO 2007/003062 A1 und die WO 2008/138710 A1 zeigen je eine Kaffeemaschine mit berührungsempfindlichem Bildschirm (Touch Screen). Beide diese Schriften lehren eine Einstellbarkeit der Getränkemenge über den Touch Screen, und beide lehren, dass auch während des Zubereitungsprozesses die Getränkemenge über eine Touch-Screen-Eingabe noch angepasst werden kann. Eingaben über einen Touch Screen ermöglichen eine präzise und unter Umständen auch intuitive Einstellung von Parametern. Nachteilig an der Lösung gemäss WO 2007/003062 A1 und WO 2008/138710 A1 mit Einstellbarkeit auch während des Zubereitungsprozesses ist jedoch, dass die gelehrte Lösung nicht optimal ist angesichts des Umstands, dass dem Benutzer in diesem Fall nur sehr wenig Zeit zur Verfügung steht, da der Zubereitungsprozess ja während der Eingabe definitionsgemäss im Gange ist. Es zeigt sich immer wieder, dass bei einer Touch-Screen-Eingabe unter Zeitdruck die Benutzer oft Fehler machen, bspw. indem sie den Touch Screen am falschen Ort berühren oder indem sie nach der eigentlichen Eingabe den Finger mit einer schleifenden Bewegung entfernen und so unfreiwillig eine weitere Eingabe tätigen, die dann aufgrund der fehlenden zur Verfügung stehenden Zeit nicht mehr oder nicht mehr befriedigend korrigiert werden kann - was beim Benutzer zu unnötigem Stress oder Unmut führen kann. Ausserdem braucht die Verarbeitung einer Touch-Screen-Eingabe durch die entsprechende Eingabeeinheit verhältnismässig viel Zeit, und das führt zu Verzögerungen, was bei einer nachträglichen Eingabe während des Zubereitungsprozesses potentiell nachteilig ist.

Aus WO 2011/144720 A1 ist eine Getränkezubereitungsmaschine gemäss dem Oberbegriff des unabhängigen Vorrichtungsanspruchs bekannt. Ausgehend vom Stand der Technik ist daher eine sich der Erfindung stellende Aufgabe, eine Getränkezubereitungsmaschine der eingangs genannten Art zur Verfügung zu stellen, welche Nachteile des Standes der Technik überwindet und welche eine möglichst benutzerfreundliche Einstellung der Getränkemenge ermöglicht.

Eine Getränkezubereitungsmaschine gemäss der Erfindung weist ein Zubereitungsmodul zum Zubereiten eines Brühgetränks aus Wasser und einem Extraktionsgut oder Extrakt und ausserdem eine Anzeigevorrichtung auf. Sie ist eingerichtet, einem Benutzer vor einem Start der Getränkezubereitung die Einstellung einer ersten Getränkemenge zu ermöglichen, und nach dem Start, während der Getränkezubereitung, die Einstellung einer von null verschiedenen verbleibenden Getränkemenge über ein physisches Bedienelement zu ermöglichen.

Der Umstand, dass die Getränkezubereitungsmaschine bzw. ein System mit Getränkezubereitungsmaschine "eingerichtet" ist, Schritte durchzuführen, bedeutet, dass nicht nur die Möglichkeit bestünde, die entsprechenden Schritte durchzuführen, sondern dass in der Maschine konkrete Massnahmen (Hardware, Programmierung) angelegt sind, um diese Schritte bei bestimmungsgemässer Bedienung durchzuführen.

Im Unterschied zum Stand der Technik wird also erfindungsgemäss über ein physisches Bedienelement der Zubereitungsvorgang nicht bloss optional abgebrochen, sondern der Benutzer kann auch noch während des Brühprozesses eine bedürfnisgerechte Einstellung vornehmen. Die Getränkezubereitungsmaschine kann bspw. eingerichtet sein, unter geeigneten Voraussetzungen (wenn der Zubereitungsprozess nicht bereits so weit fortgeschritten ist, dass die erste Getränkemenge schon zubereitet ist und wenn die erste Getränkemenge nicht einem einstellbaren Maximalwert entspricht) die Gesamt-Getränkemenge (inklusiv des bereits zubereiteten Anteils) im Vergleich zur ersten Getränkemenge sowohl grösser als auch kleiner wählen.

Die Einstellung der verbleibenden Getränkemenge kann insbesondere über das Einstellen (Anpassen) einer Gesamt-Getränkemenge des ganzen Getränks oder eines Getränkebestandteils geschehen. Wenn die während der Getränkezubereitung angepasste Gesamt-Getränkemenge grösser ist als die bereits zubereitete Getränkemenge, entspricht die verbleibende Getränkemenge der Differenz. Ist sie gleich gross oder, sofern eine solche Auswahl zugelassen wird, kleiner, wird der Zubereitungsvorgang abgebrochen, d.h. die vom Benutzer ausgewählte verbleibende Getränkemenge ist 0.

Ein physisches Bedienelement ist im Unterschied zu einem berührungsempfindlichen Bildschirm ein relativ zu einem Gehäuse der Getränkezubereitungsmaschine physisch bewegbares Element, bspw. ein Drehrad (das als Dreh-Drückknopf mit einer Auslösebewegung in bezüglich der Drehachse axialer Richtung oder auch bspw. in der Art eines Scrollrads, eventuell mit Auslösebewegung in bezüglich der Drehachse radialer Richtung ausgestaltet sein kann), ein Schiebehebel, ein Steuerhebel (in der Art eines Steuerknüppels), ein Wippenschalter, etc. Das erfindungsgemässe physische Bedienelement ist ein Dreh-Druckknopf.

Die aktuell eingestellte verbleibende Getränkemenge kann insbesondere durch Betätigung des physischen Bedienelements so lange einstell- und korrigierbar sein (insbesondere in beide Richtungen) bis der Benutzer eine Bestätigungseingabe macht, nämlich eine Auslösebewegung des Dreh-Drückknopfs.

Die Anzeigevorrichtung kann eingerichtet sein, die aktuelle Einstellung der verbleibenden Getränkemenge unmittelbar in Echtzeit anzuzeigen. Eine solche Anzeige kann numerisch und/oder grafisch geschehen. Besonders vorteilhaft kann es sein, wenn durch die Anzeigevorrichtung die eingestellte verbleibende Getränkemenge bzw. Gesamt-Getränkemenge grafisch in Relation zur bereits zubereiteten Getränkemenge und/oder zu einer maximalen möglichen Getränkemenge und/oder eventuell zu der ersten Getränkemenge darstellbar ist.

In Ausführungsformen kann bei einem Einstellen der verbleibenden Getränkemenge die bereits abgegebene Getränkemenge durch ein Anzeigeelement dargestellt werden. Ein solches Anzeigeelement kann bspw. als Fortschrittsbalken ausgebildet sein. Als Fortschrittsbalken gilt hier jede sogenannte 'Bargraph'-Anzeige, bei welcher die darzustellende Menge durch die Ausdehnung eines grafischen Elements in einer Richtung (der 'Länge' des ,Balkens') dargestellt wird - auch wenn die Form von einer reinen Balkenform abweicht, bspw. indem der Balken als Trinkgefäss, mit konstantem oder entlang der Fortschrittsrichtung auch nicht konstantem Durchmesser erscheint. Alternativ zum Fortschrittsbalken sind auch andere Diagrammformen denkbar, bspw. eine Kreisform mit einem den Fortschritt anzeigenden, stetig grösser werdenden Sektor etc..

In solchen Ausführungsformen mit grafischer Darstellung der abgegebenen Getränkemenge in Echtzeit kann bei der Einstellung der verbleibenden Getränkemenge ein dediziertes Anzeigeobjekt, welches die angepasste Getränkemenge (abgegebene Getränkemenge plus verbleibende Getränkemenge) in Relation zum Anzeigeelement bewegbar sein, bspw. eine sich relativ zum Fortschrittsbalken bewegende Linie, ein Pfeil oder ähnlich.

Insbesondere kann in Ausführungsformen, in denen die bereits zubereitete Getränkemenge in Echtzeit ermittelt wird, für die Einstellung der verbleibenden Getränkemenge die eingestellte/angepasste Getränkemenge mit der ermittelten bereits zubereiteten Getränkemenge verglichen werden, wobei beispielsweise eine Einstellung einer Gesamt-Getränkemenge kleiner als die bereits zubereitete Getränkemenge (entsprechend einer physikalisch unsinnigen negativen verbleibenden Getränkemenge) nicht zugelassen wird.

In Ausführungsformen, in welchen die bereits abgegebene Getränkemenge in Echtzeit dargestellt wird, kann wie an sich bekannt die Darstellung so skaliert sein, dass eine maximale Menge (100%; bspw. 'der Balken/das Item ist ganz gefüllt') der voreingestellten ersten Getränkemenge entspricht. Im Falle einer Betätigung des physischen Bedienelements zwecks nachträglicher Anpassung der verbleibenden Getränkemenge kann gemäss einer Option das Anzeigeelement neu skaliert werden, und zwar so, dass eine maschinenseitig vorgegebene maximale einstellbare Getränkemenge der maximalen Menge entspricht, wobei dann optional die erste Getränkemenge durch eine separates weiteres Anzeigeobjekt (Linie, Pfeil etc.) ebenfalls dargestellt wird. Nach Bestätigung der angepassten verbleibenden Getränkemenge durch den Benutzer wird entweder die Anzeige erneut so skaliert, dass die maximale Menge der eingestellten (nun angepassten) Getränkemenge entspricht, oder die Skalierung kann auch so verbleiben, wie sie während der Anpassung ist.

Die Einstellung der ersten Getränkemenge kann eine Einstellbarkeit über einen Touch Screen sein. Ein solcher Touch Screen kann an der Getränkezubereitungsmaschine selbst oder an einem mit dieser in Kommunikationsverbindung bringbaren Bediengerät vorhanden sein, bspw. einem Mobiltelefon beispielsweise ein Mobiltelefon, insbesondere Smartphone, mit einem entsprechenden Benutzerinterface und entsprechender das Gerät zum Bediengerät befähigender Software.

Ergänzend oder alternativ zu einer Einstellbarkeit über einen Touch Screen kommt für die Einstellung der ersten Getränkemenge auch eine Einstellbarkeit über ein anderes Mittel in Frage, beispielsweise ebenfalls über das physische Bedienelement, beispielsweise durch Auswahl aus einem von mehreren Vorschlägen oder direkt durch Auswahl einer in Zahlen angegebenen Menge, etc.

Die Einstellung der ersten Getränkemenge ist insbesondere vom blossen Drücken eines von mehreren Startknöpfen verschieden. Sie erlaubt bspw. das Auswählen und bei Bedarf korrigieren der ersten Getränkemenge bis der Benutzer ein entsprechendes Bestätigungssignal gibt. Ein solches Bestätigungssignal kann für die Getränkezubereitungsmaschine gleichzeitig ein Startsignal sein, besonders dann, wenn die Einstellung der ersten Getränkemenge an der Getränkezubereitungsmaschine selbst erfolgt. Es kann aber auch ein separates Startsignal gefordert werden, beispielsweise dann, wenn die Einstellung der ersten Getränkemenge über ein separates Bediengerät erfolgt und das Bestätigungssignal die Übermittlung der eingestellten Getränkemenge an die Getränkezubereitungsmaschine auslöst - ein separates Startsignal kann dann noch an der Getränkezubereitungsmaschine selbst erforderlich sein, insbesondere um zu verhindern, dass versehentlich eine Getränkezubereitung ausgelöst wird, ohne dass an Ort und Stelle ein Trinkgefäss positioniert wäre.

Das durch das Zubereitungsmodul zubereitete Brühgetränk ist insbesondere Kaffee, eventuell auch ein anderes Heissgetränk. Das Zubereitungsmodul ist demnach insbesondere eine Kaffeemaschine oder ein Teil einer Kaffeemaschine. Es kann insbesondere als Getränkezubereitungsmodul mit einem Brühmodul zur Aufnahme einer Portionspackung der vorstehend genannten Art, insbesondere einer mit Extraktionsgut (bspw. Kaffeepulver) gefüllten Portionenkapsel ausgebildet sein.

Das Zubereitungsmodul weist im Allgemeinen nebst einem Brühmodul, bspw. zur Aufnahme der Portionspackung auch weitere Elemente auf, wie sie an sich für Getränkezubereitungsmaschinen bekannt sind, bspw. einen Wassertank, eine Flüssigkeitspumpe und ein Wassererhitzungsmittel, die in Durchflussrichtung nacheinander und vor dem Brühmodul angeordnet sind um das Brühmodul mit heissen Wasser zu versorgen, welches dann, insbesondere in einer Portionspackung der genannten Art, mit dem Extraktionsgut oder eventuell Extrakt in Kontakt gebracht wird.

Ganz generell kann die Getränkemenge (die erste Getränkemenge bzw. die angepasste verbleibende Getränkemenge) die Gesamt-Getränkemenge sein, oder sie kann auch eine Menge eines Getränkebestandteils bzw. eines Verhältnisses zwischen Getränkebestandteilen sein.

Insbesondere weist in einer Gruppe von Ausführungsformen die Getränkezubereitungsmaschine nebst einem Zubereitungsmodul für ein Brühgetränk als ein Getränkebestandteil auch ein Milchmodul für die Abgabe von Milch als anderen Getränkebestandteil auf. Die Getränkezubereitungsmaschine kann einen Auslauf aufweisen, der so ausgebildet ist, dass das Brühgetränk und die Milch in ein und dasselbe Trinkgefäss abgegeben werden können, welches Trinkgefäss auf einer Abstellplattform abgestellt ist (d.h. ohne dass das Trinkgefäss zwischen der Abgabe des Brühgetränks und der Abgabe der Milch umplatziert werden müsste).

Von einem solchen Milchmodul abgegebene Milch kann in der Form von flüssiger warmer oder kalter Milch und/oder als warmer oder kalter Milchschaum abgegeben werden. Demnach kann das Milchmodul eine Milchförder- und/oder Milchschäumvorrichtung aufweisen, bspw. zur wahlweisen Förderung von Milch und/oder zum Erwärmen der Milch und/oder zur Zubereitung von kaltem oder heissem Milchschaum. Zusätzlich kann das Milchmodul ein Milchgefäss aufweisen.

Das Zubereitungsmodul und ein solches Milchmodul können zusammen in einer gemeinsamen Einheit integriert sein. Alternativ können das Zubereitungsmodul und ein Milchmodul auch in getrennten, aneinander koppelbaren Vorrichtungen vorhanden sein. Insbesondere können sie wie in PCT/EP2015/071795 beschrieben eine Grundeinheit mit dem Zubereitungsmodul, und daran andockbar das Milchmodul als über ein Andockelement andockbare, von der Grundeinheit her angesteuerte und mit Strom und Wasserdampf versorgte Vorrichtung aufweisen. In diesem Fall, in welchem das Milchmodul nicht als eigenständige Maschine funktionieren kann, bilden die Grundeinheit und das Milchmodul zusammen die Getränkezubereitungsmaschine.

Eine Anzeigevorrichtung der genannten Art kann in Ausführungsformen mit Zubereitungsmodul und Milchmodul ausgerüstet sein, die kumulierte Menge des abgegebenen Brühgetränks und der abgegebenen Milch über ein gemeinsames Anzeigeelement anzuzeigen. Das Anzeigeelement zeigt in Ausführungsformen also einen Füllstand an, welcher eine addierte Menge, beispielsweise ein addiertes Volumen, der beiden Getränkeanteile (Brühgetränk, abgegebene Milch) repräsentiert.

In den Ausführungsformen der genannten Gruppe mit Milchmodul kann die erfindungsgemäss während des Zubereitungsprozesses einstellbare verbleibende Getränkemenge eine verbleibende Getränkemenge des Brühgetränks und/oder der Milch sein, und im letzteren Fall kann die nachträgliche Einstellbarkeit optional auch eine Einstellbarkeit der Milchschaum-Menge mit einschliessen. Wenn mehrere Getränkebestandteile vorhanden sind (wobei Milch und Milchschaum als zusammen ein Getränkebestandteil oder als separate Getränkebestandteile aufgefasst werden können und die Getränkezubereitungsmaschine entsprechend eingerichtet sein kann), kann die Einstellbarkeit jeweils eine Einstellbarkeit eines Absolutwerts der verbleibenden Getränkemenge und/oder eine Einstellbarkeit eines Mengenverhältnisses beinhalten.

Ergänzend oder alternativ zu Milch sind auch andere Getränkebestandteile denkbar, bspw. ein Sirup etc.

Nebst der Getränkezubereitungsmaschine ist auch ein Verfahren zum Betreiben einer Getränkezubereitungsmaschine Gegenstand der vorliegenden Erfindung. Dieses Verfahren zeichnet sich dadurch aus, dass die Getränkezubereitungsmaschine die vorstehend beschriebenen Schritte, für die sie eingerichtet ist, mindestens teilweise ausführt.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Getränkezubereitungsmaschine mit einem Zubereitungsmodul, einem Milchmodul und einer gemeinsamen Ansteuerung;
- Figur 2: eine Anzeigevorrichtung;
- Figur 3: ein Schema eines Getränkezubereitungssystems mit der Getränkezubereitungsmaschine und einem Bediengerät;
- Figuren 4a, 4b: den Fortschrittsbalken der Anzeigevorrichtung zu unterschiedlichen Zeitpunkten während einer Getränkezubereitung; und
- Figuren 5a, 5b: die Anzeigevorrichtung während einer nachträglichen Anpassung der Brühgetränk-Menge bzw. der Milchmenge.

Die in den Zeichnungen verwendeten Bezugszeichen und deren Bedeutung sind in der Bezugszeichenliste zusammengefasst aufgelistet. Grundsätzlich bezeichnen in den Zeichnungen gleiche Bezugszeichen gleiche oder analoge Elemente.

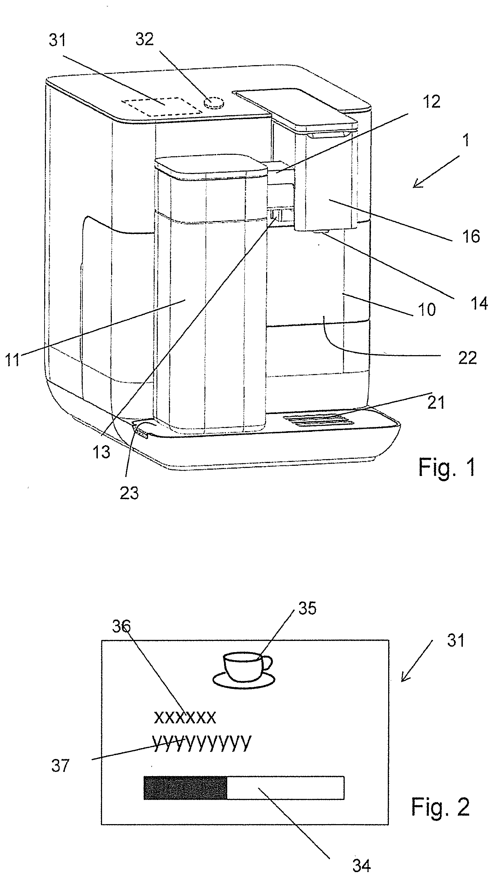

**Figur 1** zeigt eine Ansicht einer Getränkezubereitungsmaschine 1 mit einer Grundeinheit 10, welche als hier Kapselkaffeemaschine ausgebildet ist und das Zubereitungsmodul umfasst, und mit einem Milchschäumergerät 11, das an die Grundeinheit ankoppelbar ist und als das Milchmodul dient. Ein Andockelement 12 der in PCT/EP2015/071795 beschriebenen Art greift entsprechende Schnittstellen des Grundgeräts ab, leitet Wasser, Dampf und eventuell Luft von der Grundeinheit in das Milchschäumergerät und bildet auch eine elektrische Verbindung zur Spannungsversorgung und/oder Übermittlung von Ansteuersignalen von aktiven Elementen (insbesondere einer Pumpe) des Milchschäumergeräts. Darüber hinaus bildet das Andockelement einen Milchauslauf 13, welcher im angedockten Zustand neben dem Brühgetränkeauslauf (hier Kaffeeauslauf 14) der Grundeinheit 10 liegt.

Die Grundeinheit weist wie an sich für Kaffeemaschinen bekannt einen Wasserbehälter, eine Wasserpumpe und einen Wassererhitzer auf. Weiter ist eine Brühkammer zum Zubereiten von Kaffee aus erhitztem Wasser durch Extraktion aus Kaffeepulver vorhanden, welches Kaffeepulver hier in einer Portionskapsel zur Verfügung gestellt wird, die vor der Zubereitung in die Kaffeemaschine eingelegt wird. Alternativ zur gezeichneten Ausgestaltung als Portionskapselsystem kann die Kaffeemaschine auch als sogenannter Kaffeevollautomat ausgebildet sein, welcher auch eine Kaffeemühle aufweist und das Kaffeepulver portionsweise mahlt und der Brühkammer zuführt. Als noch weitere Alternative - insbesondere wenn die Kaffeemaschine als Kolbenmaschine ausgebildet ist, d.h. die Brühkammer zwischen einem festen Teil und einem entfernbaren Kolben ausgebildet ist, kann auch vorgesehen sein, dass das Kaffeepulver vom Benutzer im bereits gemahlenen Zustand, aber lose in die Brühkammer eingebracht wird.

Weiter kann die Kaffeemaschine einen Auffangbehälter für verbrauchte Kaffeepulverportionen (in Kapseln oder lose, je nach Ausgestaltung der Kaffeemaschine) aufweisen.

An der Kaffeemaschine ist eine Abstellplattform 21 zum Abstellen eines Trinkgefässes ausgebildet. Diese kann beispielsweise durch einen Gitterrost gebildet sein, unter welchem sich eine Auffangschale befindet. In Ausführungsformen kann die Abstellplattform auf geeignete Art höhenverstellbar sein.

Über der Abstellplattform 21 befindet sich der Kaffeeauslauf 14, durch welchen der gebrühte Kaffee ausläuft und in das darunter liegende Gefäss gelangt. Dieser befindet sich unter einer Auslaufhaube 16, welche einen Teil des Kaffeemaschinengehäuses bildet und den Auslauf nach vorne und zu den Seiten hin mindestens teilweise abdeckt.

Die Grundeinheit 10 bildet eine Front 22 von welcher wie an sich von anderen Kaffeemaschinen bekannt einerseits die Abstellplattform 21 und andererseits darüber die Auslaufhaube 16 vorsteht.

Ebenfalls vor der Front steht hier eine Milchschäumerplattform 23 vor, auf welcher das angedockte Milchschäumergerät 11 abgestellt ist.

In der Nähe des Kaffeeauslaufs 14 und hier seitlich an der Auslaufhaube 16 befindet sich eine Anschlussstelle zum Anschliessen des Andockelements an die Kaffeemaschine. Diese Anschlussstelle weist eine Dampfabgabestelle zum Koppeln an einen Dampfanschluss des Andockelements und eventuell eine Heisswasser- und/oder Dampfabgabestelle zum Koppeln an eine Durchführungsleitung für ein Reinigungsfluid (Heisswasser/Dampf) für das Milschäumergerät auf. Die Dampfabgabestelle und die Heisswasser- und/oder Dampfabgabestelle werden bei Bedarf vom Wassererhitzer her mit Dampf bzw. Heisswasser versorgt, wobei beispielsweise ein Mehrwegeventil im Innern der Kaffeemaschine erhitzte Flüssigkeit bzw. Dampf wahlweise dem Brühmodul, der Dampfabgabestelle oder der Heisswasser- und/oder Dampfabgabestelle zuführen kann.

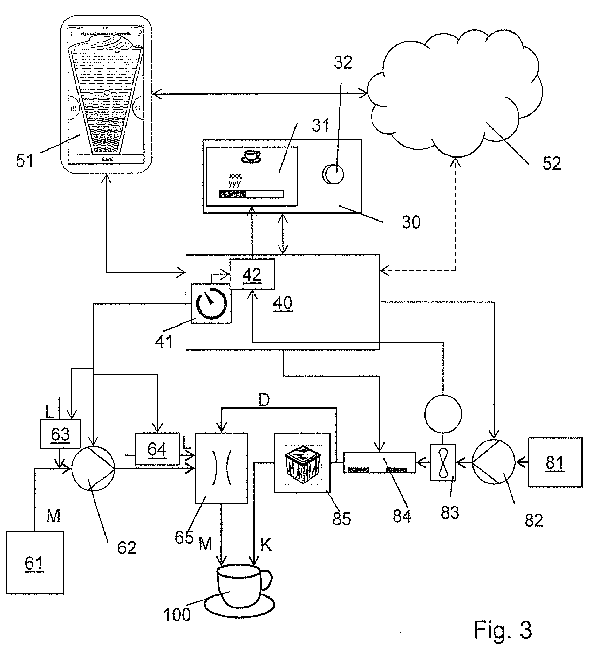

Weiter sind eine Anzeigevorrichtung 31 und ein Bedienelement 32 vorhanden, die im dargestellten Ausführungsbeispiel an der Grundeinheit 10 angeordnet sind. Zusammen bilden sie ein geräteeigenes Benutzerinterface 30 (siehe Fig. 3).

Die Anzeigevorrichtung 31 ist ein Display, ohne oder eventuell mit Touch-Screen-Funktionalität.

Das Bedienelement 32 ist ein physisches Bedienelement und als Dreh-Drückknopf ausgebildet, wie er von vielen Haushaltgeräten bekannt ist. Der Dreh-Drückknopf kann so programmiert sein, dass durch Drehen zwischen verschiedenen zur Auswahl stehenden Elementen (verschiedene Menüpunkte, verschiedene Zubereitungsvorschriften, sich durch Schritte voneinander unterscheidende Getränkemengen etc.) ausgewählt werden und durch Drücken in axialer Richtung die aktuelle über die Anzeigevorrichtung angezeigte Auswahl bestätigt wird.

Im vorliegenden Ausführungsbeispiel und generell oft bevorzugt ist die Getränkezubereitungsmaschine so ausgebildet, dass sie als Standalone-Gerät voll funktionsfähig und ohne das nachstehend beschriebene externe Bediengerät bedienbar ist, d.h. alle für einen Betrieb wirklich notwendigen Eingaben und Informationsausgaben können über das geräteeigene Benutzerinterface erfolgen, was nicht ausschliesst, das optional gewisse nicht betriebsnotwendige Funktionalitäten - bspw. die Einstellung von relativen Mengen - eine Eingabe über das Bediengerät voraussetzen.

Auch ist hier die Grundeinheit (Kapselkaffeemaschine) so ausgebildet, dass sie auch ohne das Milchmodul betrieben werden kann, wobei bevorzugt die An- oder Abwesenheit des Milchmoduls detektierbar ist und die entsprechenden (Milch-) Funktionen nur zur Verfügung stehen, wenn das Milchmodul angekoppelt ist.

In **Figur2** sieht man die Anzeigevorrichtung 31. Sie weist ein Anzeigeelement 34 auf. Dieses ist hier als Fortschrittsbalken (Bargraph-Anzeige) ausgebildet.

Im dargestellten Ausführungsbeispiel ist das Anzeigeelement als schmuckloser Balken ausgebildet. Es ist aber auch möglich, einen solchen Fortschrittsbalken mit grafischen Elementen zu versehen, beispielsweise durch Farbwahl, entsprechend ausgestaltete Formen, sich bewegende Elemente, etc.; auch eine Darstellung des Fortschrittsbalkens beispielsweise in Form eines Trinkgefässes ist nicht ausgeschlossen.

Nebst dem Anzeigeelement 34 sind auf der Anzeigevorrichtung 31 weitere Informationen dargestellt, bspw. ein Symbol 35, das die Art des Vorgangs anzeichnet (Brühen des Getränks, Reinigungsvorgang, etc.). Für jeden Abschnitt der Getränkezubereitung (Brühvorgang, Milchzubereitung, usw.) kann ein passendes Symbol angezeigt werden, es ist aber natürlich auch denkbar, während der gesamten Getränkezubereitung das gleiche Symbol anzuzeigen. Weiter ist eine erste Angabe 36 vorhanden, welche beispielsweise für die durch eine Kapselerkennungsvorrichtung erkannte Sorte des Brühgetränks stehen kann (konkret bspw. der Name einer Kapselsorte). Eine zweite Angabe 37 kann beispielsweise das vom Benutzer über das Bedienelement und/oder das separate Bediengerät ausgewählte Getränk darstellen, also bspw. "Milchkaffee", "Latte Macchiato", ein benutzerdefiniertes und entsprechend spezifisch benanntes Rezept (Zubereitungsvorschrift), etc.

Auch Anweisungen an den Benutzer können ergänzend oder alternativ angezeigt werden, bspw. - abhängig vom gewählten Rezept - "bitte jetzt Karamellsirup hinzufügen" oder "Eiswürfel ergänzen" oder auch Unterhaltsanweisungen wie "Bitte Milch in den Milchbehälter nachfüllen".

**Figur 3** zeigt ein Schema des Getränkezubereitungssystems, das nebst der Getränkezubereitungsmaschine der anhand Figur 1 beschriebenen Art auch ein optionales Bediengerät 51 aufweist.

Das Bediengerät kann mit einem Netzwerk 52, bspw. dem Internet oder einem Intranet in Kommunikationsverbindung stehen; es ist auch möglich, dass zusätzlich eine direkte Verbindung zwischen einem solchen Netzwerk 52 und der Getränkezubereitungsmaschine besteht.

Die Getränkezubereitungsmaschine weist eine zentrale (eventuellen Steuerungen der Elemente der Grundeinheit und des Milchmoduls übergeordnete oder diese beinhaltende) Steuereinheit 40 auf. Die Steuereinheit 40 ist auch für eine Kommunikationsverbindung mit dem Benutzerinterface 30 und gegebenenfalls dem Bediengerät 51 eingerichtet und mit entsprechenden Kommunikationsmitteln versehen oder verbunden. Das optionale Bediengerät 51 kann insbesondere drahtlos (beispielsweise mittels Wi-Fi, Bluetooth, etc.) oder allenfalls auch drahtgebunden (beispielsweise mittels Ethernet, USB) mit der Steuereinheit 40 kommunizieren.

Der Begriff "Steuereinheit" impliziert in diesem Text nicht notwendigerweise, dass die Steuereinheit eine physische Einheit ist. Vielmehr kann sie unter Umständen physisch separate Untereinheiten umfassen.

Ein Bediengerät51 der beschriebenen Art kann als Smartphone ausgebildet sein und eingerichtet und mit Software versehen sein, die Funktionen wahrzunehmen, welche in der europäischen Patentanmeldung 15 194 735.5 beschrieben sind, auf die hier explizit Bezug genommen wird. Es weist ein Benutzerinterface auf, beispielsweise einen berührungsempfindlichen Bildschirm (Touchscreen), welcher als Ein- und Ausgabeeinheit funktioniert. Zusätzlich oder alternativ können auch Taster des Bediengerätes als Eingabeeinheiten dienen. Zusätzlich oder alternativ kann eine Spracheingabe realisiert sein.

Ist ein Bediengerät 51 vorhanden, können Informationen an den Benutzer und Eingaben des Benutzers über das Benutzerinterface 30 und/oder das Bediengerät 51 ausgegeben respektive eingegeben werden.

Die Steuereinheit 40 weist einen Speicher auf, in welchem unter anderem Zubereitungsvorschriften gespeichert sein können. Eine Zubereitungsvorschrift weist Steuerinformationen auf, die in Befehle zur Steuerung der Grundeinheit 10 und der Zusatzeinheit 11 umgesetzt werden können. Solche Steuerinformationen weisen einerseits Ablaufinformationen auf, welche einen Ablauf von Schritten spezifizieren, die durch die Grundeinheit 10 und/oder das Milchmodul 11 zum Erzeugen eines Gesamtproduktes auszuführen sind. Andererseits weisen die Steuerinformationen beispielsweise Temperaturen, Volumenangaben, Zeitangaben, etc. auf - im Folgenden allgemein auch Zubereitungsparameter genannt - welche einen Ablauf parametrisieren.

Ablaufinformationen repräsentieren beispielsweise "Wassererhitzungsmittel einschalten; Pumpe des Brühmoduls während fünfzehn Sekunden einschalten; nach Abschalten der Pumpe mindestens fünf Sekunden warten bis das Wassererhitzungsmittel auf Dampferzeugungs-Solltemperatur ist; Milchpumpe während zwölf Sekunden einschalten und gleichzeitig Dampfventil öffnen". Die in diesem Beispiel erwähnten Zeiten und Temperaturen können durch Zubereitungsparameter spezifiziertsein und/oder durch die Steuerung nach Massgabe von andern Zubereitungsparametern und Sensormesswerten bestimmt werden.

Eine Zubereitungsvorschrift kann auch Benutzeranweisungen enthalten. Diese Anweisungen sind Teil der Zubereitung des Gesamtproduktes und müssen durch einen Benutzer ausgeführt werden. Dazu können die Benutzeranweisungen über das Benutzerinterface 30 und/oder ggf. über das Bediengerät 51 angezeigt werden. Beispielsweise sind solche Benutzeranweisungen "Jetzt Eiswürfel hinzufügen" oder "Bitte 20ml Karamelsirup abmessen" oder "Jetzt den vorbereiteten Karamelsirup hinzufügen" oder "Bitte umrühren" oder "Bitte überprüfen, ob eingelegte Kapsel und angewähltes Rezept zusammenpassen" etc. Eine Benutzeranweisung kann von einer visuellen Darstellung begleitet sein, beispielsweise des herzustellenden Gesamtproduktes, einer ausgewählten oder einertatsächlich eingelegten Kapsel etc.

Zur Zubereitung eines Produktes werden entsprechend der Zubereitungsvorschrift Steuerinformationen respektive entsprechende Befehle durch die Grundeinheit 10 und Zusatzeinheit 11 umgesetzt und damit ein Zubereitungsablauf realisiert. Falls die Zubereitungsvorschrift Benutzeranweisungen aufweist, werden diese an entsprechenden Stellen des Ablaufs dem Benutzer angezeigt. Beispielsweise nach einer Quittierung durch den Benutzer mittels Bedienelement 32 oder eventuell ggf. über das Bediengerät werden nachfolgende Steuerinformationen des Zubereitungsablaufs umgesetzt.

Eine Zubereitungsvorschrift kann Zubereitungsparameter aufweisen, die durch den Benutzer angepasst werden dürfen, sowie Zubereitungsparameter, die nicht durch den Benutzer anpassbar sind. Anpassbare Zubereitungsparameter sind beispielsweise (Volumen)Anteile von Getränkebestandteilen im Gesamtprodukt, eine Gesamtmenge, oder die Temperatur eines Getränkebestandteils. Für anpassbare Zubereitungsparameter kann die Zubereitungsvorschrift einen Standardwert oder Defaultwert enthalten, welcher verwendet wird, wenn der Benutzer den Parameter nicht anpasst.

Zur Anpassung von anpassbaren Zubereitungsparametern wird dem Benutzer über das Benutzerinterface 30 oder ggf. das Bediengerät 51 eine Auswahl eines oder mehrere solcher Zubereitungsparameter angezeigt und wird eine Eingabe des Benutzers zur Anpassung des Zubereitungsparameters erfasst. Die Eingabe kann durch Betätigen von realen Tastern und/oder von virtuellen Tastern wie Schaltflächen oder "Buttons", insbesondere "Pfeiltasten" und/oder von verschiebbaren Markierungen oder "Slider" auf einem Touchscreen des Bediengerätes 51 erfolgen.

In Figur 3 ist der Weg der Brühflüssigkeit in ein auf der Abstellplattform abgestelltes Trinkgefäss 100 von ganz rechts in Richtung links, und der Weg der Milch in dasselbe Trinkgefäss von ganz links in Richtung rechts dargestellt.

Als die Brühflüssigkeit wird Wasser durch eine Wasserpumpe 82 von einem Wassertank 81 zu einem Wassererhitzungsmittel 84 - Durchlauferhitzer oder Boiler - gefördert, wo es für die Zubereitung des Brühgetränks auf eine Brühtemperatur - beispielsweise eine Temperatur zwischen 90°C und dem Siedepunkt - erhitzt wird. Auf dem Weg zum Wassererhitzungsmittel, d.h. zwischen dem Wassertank 81 und der Pumpe 82 oder wie gezeichnet zwischen der Pumpe 82 und dem Wassererhitzungsmittel 84 ist ein Durchflussmesser 83 (hier als Turbinenrad-Durchflussmesser illustriert) angeordnet, welcher den Durchfluss der durch die Pumpe geförderten Flüssigkeit misst. Vom Wassererhitzungsmittel gelangt das Wasser ins Brühmodul 85, wo es hier durch eine mit gemahlenem Kaffeepulver gefüllte Kapsel hindurch gefördert wird, was einen Extraktionsprozess. Die Brühflüssigkeit wird dann als Kaffee K über den Kaffeeauslauf abgegeben und gelangt in ein unter diesem abgestelltes Trinkgefäss 100. Das erhitzte Wasser kann wahlweise auch verdampft und als Wasserdampf D dem Milchmodul zugeführt werden, oder bspw. als Reinigungsflüssigkeit dem Milchmodul zugeführt werden (letztere Alternative ist in Fig. 3 nicht illustriert).

Die Milch M wird aus einem Milchgefäss 61 gefördert, insbesondere durch eine Milchpumpe 62, die beispielsweise als Zahnradpumpe ausgebildet ist, wie das in der PCT/EP2015/071795 beschrieben ist. Durch diese kann auch je nach gewünschter Zubereitungsart unter Zufuhr von Luft L (erstes Luftventil 63) die Milch kalt geschäumt werden. Von der Milchpumpe 62 gelangt die Milch - unter Umständen mindestens teilweise als Milchschaum - in eine Mischdüse 65, wo sie je nach gewünschter Zubereitungsart unter Zuführung von Dampf D erhitzt und/oder unter Zuführung von Luft (zweites Luftventil 64) geschäumt wird. Durch den Milchauslauf gelangt sie von dort ins Trinkgefäss 100.

Sowohl das erste als auch das zweite Luftventil 63, 64 sind beispielsweise ansteuerbar. Durch Wahl der Luftzufuhrüberdas erste Luftventil 63 und/oderdas zweite Luftventil und/oder durch die Dampfzufuhr können sowohl die Temperatur als auch der Schaumanteil innerhalb von Grenzen geregelt werden. Diesbezügliche Funktionsprinzipien eines möglichen Milchmoduls sind in der erwähnten PCT/EP2015/071795 beschrieben, auf die hier diesbezüglich ausdrücklich Bezug genommen wird.

Die Steuereinheit 40 steuert die Wasserpumpe 82, die Milchpumpe 62 und die Ventile 63, 64 an und steuert auch den Fluss des erhitzten Wassers bzw. Dampfs (ins Brühmodul 85, die Mischdüse, ggf. einen Pfad für Reinigungsflüssigkeit), bspw. über ein ansteuerbares Mehrwegeventil (in Fig. 3 nicht dargestellt). Die Steuereinheit 40 steht auch in Kommunikationsverbindung mit dem Benutzerinterface 30. Für die Bestimmung des Füllstandes, welcher über das Anzeigeelement 34 ausgegeben wird, wird einerseits das Resultat der Messung durch den Durchflussmesser 83 berücksichtigt, und andererseits die Zeit, während welcher Milch gefördert wird, unter Umständen abhängig vom Öffnungszugstand der Luftventile 63, 64 (d.h. abhängig davon, ob geschäumt wird oder nicht und ggf. unter Umständen auch davon, wie gross der Schaumanteil ist) und/oder von einer Dampfzufuhr in die Mischdüse. In Fig. 3 wird das durch einen Timer 41 dargestellt, welcher die Zeit für die Milchzubereitung erfasst und einer in der Steuereinheit 40 angelegten Einrichtung zur Bestimmung des Füllstandes 42 weiterleitet, welcher Einrichtung auch die Resultate der Durchflussmessung zugeleitet werden.

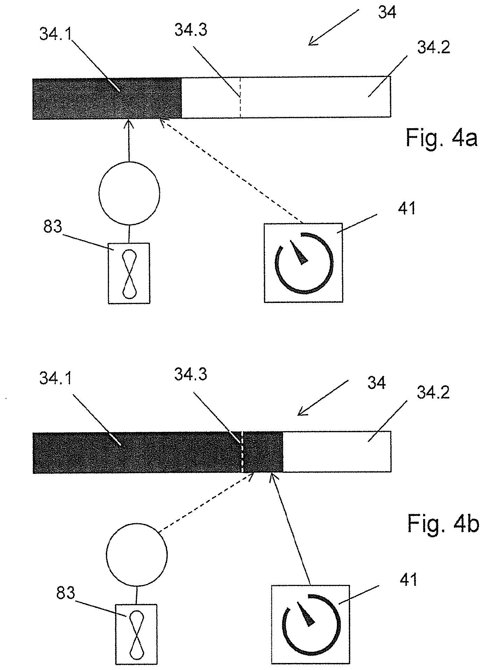

**Figuren 4a und 4b** zeigen das Anzeigeelement 34 (den Fortschrittsbalken) während unterschiedlichen Phasen der Getränkezubereitung. In einer ersten Phase (Fig. 4a) wird der eine Getränkebestandteil zubereitet und der entsprechende Fortschritt durch den wachsenden ausgefüllten Balkenteil 34.1 dargestellt. Der erste Getränkebestandteil kann bspw. das Brühgetränk sein, dessen Füllstand durch den Durchflussmesser 83 ermitteltwird (ausgezogener Pfeil). Je nach Rezept kann auch umgekehrt zuerst der Milchbestandteil zubereitet werden, in welchem Fall der ausgefüllte Balkenteil während der ersten Phase bspw. in Funktion der Zeit wächst (gestrichelter Pfeil). In der zweiten Phase (Fig. 4b) wird der zweite, andere Getränkebestandteil zubereitet, wobei für den Benutzer derausgefüllte Balkenteil 34.1 einfach weiter auf Kosten des nicht ausgefüllten Balkenteils 34.2 wächst. Auch die mindestens teilweise gleichzeitige Zubereitung der Getränkebestandteile ist nicht ausgeschlossen und wird dann durch einen entsprechend schneller wachsenden Balken berücksichtigt.

Optional kann das Anzeigeelement Angaben darüber enthalten, welcher Teil den ersten Getränkebestandteil repräsentiert und welcher Teil den zweiten Getränkebestandteil, hier in Form einer Trennlinie 34.3 dargestellt.

Unabhängig davon, ob eines solche Angabe vorhanden ist oder nicht, kann der relative Anteil der Getränkebestandteile am gesamten Anzeigeelement (hier am Fortschrittsbalken) fest vorgegeben oder abhängig vom Rezept sein. Im letzten Fall kann er bspw. die relativen Volumenanteile wiederspiegeln, wobei die unterschiedlichen Dichten von Milch und Milchschaum berücksichtigt sein können oder auch nicht.

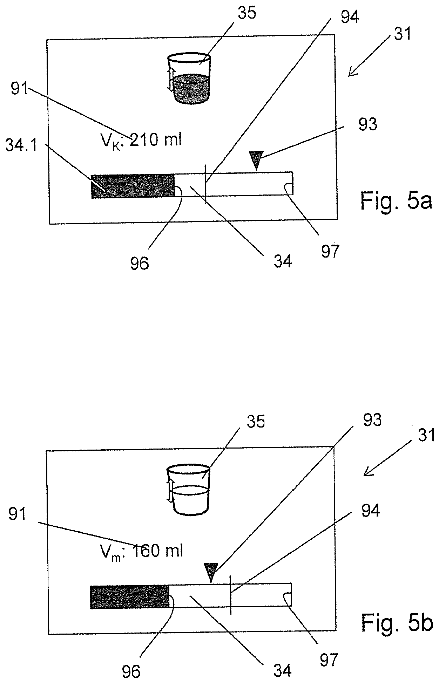

Wenn der Benutzer während des Zubereitungsprozesses die Getränkemenge bzw. die Menge eines der Getränkebestandteile anpassen will, betätigt er das Bedienelement 32 durch Drehen am Dreh-Drückknopf. Dann wird die Anzeige gemäss Fig. 4a/Fig. 4b auf der Anzeigevorrichtung durch eine andere Anzeige ersetzt. Beispielsweise entsprechend **Figur 5a oder 5b****.**

Figur 5a zeigt die Anpassung der Brühgetränk-Menge (Kaffeemenge), zu welcher der Benutzer dann geführt wird, wenn er das Bedienelement während der Zubereitung des Brühgetränks betätigt, hier durch Drehen des Dreh-Drückknopfs (bei einer Betätigung durch Drücken kann derselbe oder optional ein anderer Schritt vorgesehen sein, bspw. ein Unterbruch des Zubereitungsvorgangs und/oder die Anzeige einer Menüauswahl). Nebst einem beispielsweise dem vorzunehmenden Schritt angepassten anderen Symbol 35 erscheint das Anzeigeelement 34 zwar in einer zu Fig. 4a/Fig. 4b analogen Darstellung, aber in einer anderen Skalierung. Die Gesamtlänge des Fortschrittsbalkens (entsprechend 100%) entspricht nun nicht mehr der Gesamt-Getränkemenge gemäss gewählter Zubereitungsvorschrift, sondern der maximalen möglichen zubereitbaren Brühgetränke-Menge - beispielsweise maschinenabhängig 350 ml, 300 ml, 280 ml, 250 ml, 200 ml oder ein anderer im Allgemeinen zwischen 150 ml und 400 ml liegender Wert. Die Länge des ausgefüllten Balkenteils 34.1 entspricht folglich dem prozentualen Anteil der bereits zubereiteten Brühgetränk-Menge an der maximal möglichen Menge.

Zusätzlich zum eigentlichen Anzeigeelement erscheinen zwei weitere Anzeigeobjekte: der Einstell-Pfeil 93 kann durch Betätigen des Bedienelements (drehen am Dreh-Drückknopf) nach rechts oder links verschoben werden und entspricht der aktuell ausgewählten Gesamt-Getränkemenge. Weiter erscheint eine optionale Markierung 94, welche die erste Getränkemenge gemäss Zubereitungsvorschrift repräsentiert und gleichzeitig den Startpunkt für den Einstell-Pfeil 93 darstellt, von dem aus dieser nach rechts bzw. links bewegbar ist. Als Untergrenze 96 für die wählbaren Werte dient die aktuelle, gemessene, bereits zubereitete Getränke-Menge. Die Obergrenze 97 ist der erwähnte maschinenseitig definierte Wert für die maximale mögliche zubereitbare Brühgetränk-Menge.

Im dargestellten Ausführungsbeispiel wird gleichzeitig mit dem Einstell-Pfeil 93 der entsprechende numerische Wert 91 für die ausgewählte Getränkemenge dargestellt. Optional kann sich auch, ergänzend oder alternativ zum Fortschrittsbalken, die Darstellung des Symbols 35 bei einer Einstellung des Werts ändern, indem der gezeichnete Füllstand (mit-)bewegt wird.

Sobald der Benutzer die gewünschte Brühgetränk-Menge erreicht hat, bestätigt er die Auswahl durch Drücken des Dreh-Drückknopfs. Die verbleibende Menge entspricht der Differenz zwischen der gewählten Menge und der bereits zubereiteten Menge.

Wenn der Dreh-Drückknopf während der Förderung/Zubereitung der Milch betätigt wird, erscheint wie in Fig. 5b illustriert eine zum Vorstehenden ganz analoge Anzeige, erneut mit der Möglichkeit, den Einstell-Pfeil 93 zwischen dem Maximalwert 97 und der bereits zubereiteten/geförderten Milchmenge als Untergrenze 96 zu bewegen und dann die getätigte Auswahl zu bestätigen. In Fig. 5b ist im Gegensatz zu Fig. 5a eine Anpassung der Menge nach unten im Vergleich zu ersten Getränkemenge dargestellt. Der Umstand, dass die Milchmenge und nicht die Brühgetränk-Menge angepasst wird, kann bspw. wie dargestellt durch ein angepasstes Symbol 35 (hier mit einer helleren Einfärbung des Getränks), durch eine angepasste Beschriftung des numerischen Werts 91 und/oder durch weitere Massnahmen (Einfärbung des Fortschrittsbalkens etc.) dargestellt werden.

### Bezugszeichenliste

- 1: Getränkezubereitungsmaschine
- 10: Grundeinheit (Kaffeemaschine)
- 11: Milchschäumergerät
- 12: Andockelement
- 13: Milchauslauf
- 14: Kaffeeauslauf
- 16: Auslaufhaube
- 21: Abstellplattform
- 22: Front
- 23: Milchschäumerplattform
- 30: Benutzerinterface
- 31: Anzeigevorrichtung
- 32: Bedienelement
- 34: Anzeigeelement
- 34.1: ausgefüllter Balkenteil
- 34.2: nicht ausgefüllter Balkenteil
- 34.3: Trennlinie
- 35: Symbol
- 36: erste Angabe
- 37: zweite Angabe
- 40: Steuereinheit
- 41: Timer
- 42: Einrichtung zur Bestimmung des Füllstandes
- 51: Bediengerät
- 52: Netzwerk
- 61: Milchgefäss
- 62: Milchpumpe
- 63: erstes Luftventil
- 64: zweites Luftventil
- 65: Mischdüse
- 81: Wassertank
- 82: Wasserpumpe
- 83: Durchflussmesser
- 84: Wassererhitzungsmittel
- 85: Brühmodul
- 91: numerischer Wert
- 93: Einstell-Pfeil
- 94: Markierung für die erste Getränkemenge
- 96: Untergrenze
- 97: Obergrenze
- 100: Trinkgefäss

## Patentansprüche

1. Getränkezubereitungsmaschine, aufweisend ein Gehäuse, ein Zubereitungsmodul zur Zubereitung eines Brühgetränks aus Wasser und einem Extraktionsgut oder Extrakt, eine Anzeigevorrichtung (31) und ein physisches Bedienelement (32), welches als relativ zum Gehäuse physisch bewegbares Element ausgebildet ist, wobei die Getränkezubereitungsmaschine eingerichtet ist, einem Benutzer vor einem Start der Getränkezubereitung eine Einstellung einer ersten Getränkemenge zu ermöglichen, wobei die Getränkezubereitungsmaschine ferner eingerichtet ist, nach dem Start, während der Getränkezubereitung, eine Einstellung einer von null verschiedenen verbleibenden Getränkemenge über das Bedienelement (32) zu ermöglichen, wobei das Betätigungselement (32) ein Dreh-Drückknopf ist, wobei die Einstellung der verbleibenden Getränkemenge über eine Drehung des Dreh-Drückknopfs erfolgt, **dadurch gekennzeichnet, dass** die Einstellung durch ein Drücken des Dreh-Drückknopfs zu bestätigen ist.

2. Getränkezubereitungsmaschine nach Anspruch 1, die zur Ermittlung und grafischen Anzeige der bereits abgegebenen Getränkemenge in Echtzeit über die Anzeigevorrichtung (31) eingerichtet ist.

3. Getränkezubereitungsmaschine nach Anspruch 1 oder 2, die zur Ermittlung der bereits abgegebenen Getränkemenge eingerichtet ist, und die eingerichtet ist, bei einer Einstellung der verbleibenden Getränkemenge eine bereits abgegebene Getränkemenge sowie in Relation dazu eine Summe der abgegebenen Getränkemenge und der eingestellten verbleibenden Getränkemenge grafisch darzustellen.

4. Getränkezubereitungsmaschine nach Anspruch 3, die eingerichtet ist, in Relation zur abgegebenen Getränkemenge und zur Summe der abgegebenen Getränkemenge und der eingestellten verbleibenden Getränkemenge auch die erste Getränkemenge und/oder eine maximale von der Maschine zubereitbare Getränkemenge darzustellen.

5. Getränkezubereitungsmaschine nach einem der vorangehenden Ansprüche, aufweisend einen berührungsempfindlichen Bildschirm, wobei die erste Getränkemenge über den berührungsempfindlichen Bildschirm einstellbar ist.

6. Getränkezubereitungsmaschine nach einem der vorangehenden Ansprüche, ferner aufweisend ein Milchmodul (11) für die Abgabe von Milch.

7. Getränkezubereitungsmaschine nach Anspruch 6, wobei die Anzeigevorrichtung (31) eingerichtet ist, eine kumulierte Menge des abgegebenen Brühgetränks und der abgegebenen Milch über ein gemeinsames grafisches Anzeigeelement (34) anzuzeigen.

8. Getränkezubereitungsmaschine nach Anspruch 6 oder 7, wobei die einstellbare verbleibende Getränkemenge eine Menge des Brühgetränks und/oder der Milch ist.

9. Getränkezubereitungsmaschine nach Anspruch 8, die eingerichtet ist, bei einer Betätigung des Bedienelements (32) während der Zubereitung des Brühgetränks die Einstellung der verbleibenden Getränkemenge des Brühgetränks zu ermöglichen und bei einer Betätigung des Bedienelements (32) während der Abgabe der Milch die Einstellung der verbleibenden Getränkemenge der Milch zu ermöglichen.

10. Getränkezubereitungsmaschine nach einem der vorangehenden Ansprüche, wobei das Zubereitungsmodul für das Brühgetränk ein Brühmodul (85) zur Aufnahme einer mit Kaffeepulver gefüllten Portionspackung, insbesondere Kapsel, aufweist.

11. Getränkezubereitungssystem, aufweisend eine Getränkezubereitungsmaschine nach einem der vorangehenden Ansprüche und ferner aufweisend ein Bediengerät (51) mit einem Bediengerät-Benutzerinterface, insbesonderen einem berührungsempfindlichen Bildschirm, wobei das Bediengerät und die Getränkezubereitungsmaschine miteinander in Kommunikationsverbindung bringbar sind, und wobei eine Eingabe der ersten Getränkemenge über das Bediengerät-Benutzerinterface tätigbar und eine daraus abgeleitete Zubereitungsvorschrift vom Bediengerät an die Getränkezubereitungsmaschine übermittelbar ist.

12. Verfahren zum Betreiben einer Getränkezubereitungsmaschine nach einem der Ansprüche 1 bis 10 oder eines Getränkezubereitungssystems nach Anspruch 11, umfassend die Schritte:
- Auswählen einer ersten Getränkemenge;
- Starten des Zubereitungsprozesses;
- Betätigen des physischen Bedienelements zum Anpassen der ersten Getränkemenge, wodurch die verbleibende Getränkemenge eingestellt wird;
- Fortsetzen des Zubereitungsprozesses bis die angepasste Getränkemenge erreicht ist;
wobei nach dem Betätigen eine Bestätigung der angepassten Getränkemenge erfolgt.

13. Verfahren nach Anspruch 12, wobei der Schritt des Auswählens der ersten Getränkemenge über einen berührungsempfindlichen Bildschirm erfolgt.

## Claims

1. A drinks preparation machine, comprising a housing, a preparation module for preparing a brewed drink from water and from an extraction material or extract, further comprising a display device (31) and a physical operating element (32) which is designed as an element which is physically movable relative to the housing, wherein the drinks preparation machine is configured to permit a user to make a setting of a first drinks quantity before a start of the drinks preparation, wherein the drinks preparation machine is further configured, after the start and during the drinks preparation, to permit an adjustment of a remaining drinks quantity which is different from zero, via the operating element (32), wherein the actuation element (32) is a rotary push button, wherein the adjustment of the remaining drinks quantity is effected via a rotation of the rotary push button, **characterized in that** the adjustment is to be confirmed by a pressing of the rotary push button.

2. The drinks preparation machine according to claim 1, which is configured to determine and graphically display the already delivered drinks quantity in real time via the display device (31).

3. The drinks preparation machine according to claim 1 or 2, which is configured to determine the already delivered drinks quantity and is configured, given an adjustment of the remaining drinks quantity, to graphically represent an already delivered drinks quantity as well as, in relation to this, a sum of the delivered drinks quantity and of the adjusted remaining drinks quantity.

4. The drinks preparation machine according to claim 3, which is configured to also represent the first drinks quantity and/or a maximal drinks quantity which can be prepared by the machine, in relation to the delivered drinks quantity and to the sum of the delivered drinks quantity and the adjusted remaining drinks quantity.

5. The drinks preparation machine according to one of the preceding claims, comprising a touch-sensitive screen, wherein the first drinks quantity can be set via the touch-sensitive screen.

6. The drinks preparation machine according to one of the preceding claims, further comprising a milk module (11) for delivering milk.

7. The drinks preparation machine according to claim 6, wherein the display device (31) is configured to display a cumulative quantity of the delivered brewed drink and of the delivered milk via a common graphic display element (34).

8. The drinks preparation machine according to claim 6 or 7, wherein the adjustable remaining drinks quantity is a quantity of the brewed drink and/or of the milk.

9. The drinks preparation machine according to claim 8, which is configured, given an actuation of the operating element (32) during the preparation of the brewed drink, to permit the adjustment of the remaining drinks quantity of the brewed drink and given an actuation of the operating element (32) during the delivery of milk, to permit the adjustment of the remaining drinks quantity of the milk.

10. The drinks preparation machine according to one of the preceding claims, wherein the preparation module for the brewed drink comprises a brewing module (85) for receiving a portion package, in a particular a capsule, which is filled with coffee powder.

11. A drinks preparation system comprising a drinks preparation machine according to one of the preceding claims and further comprising an operating appliance (51) with an operating appliance user interface, in particular with a touch-sensitive screen, wherein the operating appliance and the drinks preparation machine can be brought into communication connection with one another, and wherein an input of the first drinks quantity can be made via the operating appliance user interface and a preparation prescript which is derived from this can be transferred from the operating appliance to the drinks preparation machine.

12. A method for operating a drinks preparation machine according to one of the claims 1 to 10 or a drinks preparation system according to claim 11, comprising the steps:
- selecting a first drinks quantity;
- starting the preparation process;
- actuating the physical operating element for adapting the first drinks quantity, by which means the remaining drinks quantity is adjusted;
- continuing the preparation process until the adapted drinks quantity is reached;
wherein a confirmation of the adapted drinks quantity is effected after the actuation.

13. The method according to claim 12, wherein the step of selecting the first drinks quantity is effected via a touch-sensitive screen.

## Revendications

1. Machine de préparation de boissons présentant un boîtier, un module de préparation servant à préparer une boisson infusée à partir d'eau et d'un produit d'extraction ou extrait, un ensemble d'affichage (31) et un élément physique de commande (32) configuré comme élément mobile physiquement par rapport au boîtier,
la machine de préparation de boissons étant conçue pour permettre à l'utilisateur de régler une première quantité de boisson avant le début de la préparation de la boisson,
la machine de préparation de boissons est en outre conçue pour permettre après le démarrage et pendant la préparation de la boisson de régler par l'intermédiaire de l'élément physique de commande (32) une quantité restante de boisson différente de zéro,
laquelle l'élément physique de commande (32) est un bouton-poussoir rotatif et dans laquelle le réglage de la quantité restante de boisson s'effectue par rotation du bouton-poussoir rotatif, caracterérisé en ce que le réglage devant être confirmé par une poussée sur le bouton-poussoir rotatif.

2. Machine de préparation de boissons selon la revendication 1, conçue pour déterminer et afficher graphiquement en temps réel sur l'ensemble d'affichage (31) la quantité de boisson déjà délivrée.

3. Machine de préparation de boissons selon les revendications 1 ou 2, conçue pour déterminer la quantité de boisson déjà délivrée et conçue pour représenter graphiquement lors du réglage de la quantité de boisson restante la quantité de boisson déjà délivrée et, en relation avec cette dernière, une somme de la quantité de boisson délivrée et de la quantité restante de boisson qui a été réglée.

4. Machine de préparation de boissons selon la revendication 3, conçue pour représenter également, en relation avec la quantité de boisson délivrée et avec la somme de la quantité de boisson délivrée et de la quantité restante de boisson qui a été réglée, la première quantité de boisson et/ou la quantité maximale de boisson que peut préparer la machine.

5. Machine de préparation de boissons selon l'une des revendications précédentes, présentant un écran tactile, la première quantité de boisson pouvant être réglée par l'intermédiaire de l'écran tactile.

6. Machine de préparation de boissons selon l'une des revendications précédentes, présentant en outre un module à lait (11) servant à délivrer du lait.

7. Machine de préparation de boissons selon la revendication 1, dans laquelle l'ensemble d'affichage (31) est conçu pour afficher sur un élément d'affichage commun (34) les quantités cumulées de boisson infusée et de lait qui ont été délivrées.

8. Machine de préparation de boissons selon les revendications 6 ou 7, dans laquelle la quantité restante de boisson est la quantité de boisson infusée et/ou la quantité de lait.

9. Machine de préparation de boissons selon la revendication 8, conçue pour permettre de régler la quantité restante de boisson infusée par actionnement de l'élément physique de commande (32) pendant la préparation de la boisson infusée et pour permettre de régler la quantité restante de boisson par actionnement de l'élément physique de commande (32) pendant la distribution du lait.

10. Machine de préparation de boissons selon l'une des revendications précédentes, dans laquelle le module de préparation de la boisson infusée présente un module d'infusion (85) qui reprend une portion emballée, en particulier une capsule, de café en poudre.

11. Système de préparation de boissons présentant une machine de préparation de boissons selon l'une des revendications précédentes et en outre un appareil de commande (51) doté d'une interface utilisateur - appareil de commande, en particulier un écran tactile, l'appareil de commande et la machine de préparation de boissons pouvant être mis en liaison de communication l'un avec l'autre et l'introduction d'une première quantité de boisson pouvant être réalisée par l'intermédiaire de l'interface utilisateur - appareil de commande, les instructions de préparation qui en découlent pouvant être transmise de l'appareil de commande à la machine de préparation de boissons.

12. Procédé d'utilisation d'une machine de préparation de boissons selon l'une des revendications 1 à 10 ou d'un système de préparation de boissons selon la revendication 11, le procédé comprenant les étapes qui consistent à :
- sélectionner une première quantité de boisson,
- lancer l'opération de préparation,
- actionner l'élément physique de commande pour adapter la première quantité de boisson, grâce à quoi la quantité restante de boisson est réglée,
- poursuivre l'opération de préparation jusqu'à ce que la quantité de boisson adaptée soit atteinte ;
dans lequel une confirmation de la quantité de boisson adaptée a lieu après l'actionnement.

13. Procédé selon la revendication 12, dans lequel l'étape de sélection de la première quantité de boisson est réalisée à l'aide d'un écran tactile.
